# EUROPEAN PATENT SPECIFICATION

(11) **EP 3 106 276 B1**
(45) Date of publication and mention of the grant of the patent: **02.07.2025**
(21) Application number: 16168616.7
(22) Date of filing: 06.05.2016
(51) Int. Cl.: B27M 1/08, B23Q 7/04

(54) **A NUMERICAL CONTROL WOODWORKING MACHINE WITH AN IMPROVED PANEL FEEDING SYSTEM AND A METHOD FOR MOVING A PANEL OF WOOD IN A WOODWORKING MACHINE**
EINE HOLZBEARBEITUNGSMACHINE MIT EINER NUMERISCHEN STEUERUNG MIT EINEM VERBESSERTEN FÜTTERUNGSSYSTEM UND EINE METHODE UM HOLZPANELE ZU BEWEGEN IN EINER HOLZBEARBEITUNGSMACHINE
UNE MACHINE A BOIS A CONTROLE NUMERIQUE AVEC UN SYSTEME DE D'APPROVISIONNEMENT EN PANEAUX AMELIORE ET UNE METHODE PERMETTANT DE MOUVOIR UN PANEAU DE BOIS A L'INTERIEUR D'UNE MACHINE PERMETTANT LE TRAVAIL DU BOIS

(30) Priority: 08.05.2015 IT FI20150133
(43) Date of publication of application: 21.12.2016
(73) Proprietor: Vitap Costruzioni Meccaniche S.p.A., 53036 Poggibonsi (SI) (IT)
(72) Inventor: FORNAI, Mauro, 53036 Poggibonsi (Siena) (IT); TANZINI, Franco, 53017 Radda in Chianti (Siena) (IT)
(74) Representative: Soldatini, Andrea

(56) References cited:
- EP-A1- 2 865 484
- EP-A2- 1 405 693
- EP-A2- 2 660 023
- WO-A1-02/094500
- DE-A1- 10 030 997
- DE-A1- 102006 019 115

## Description

The present invention refers to a method for moving a panel, according to the preamble of claim 1, and a machine for drilling/milling a panel, according to the preamble of claim 4. Such a method and such a machine for drilling/milling are known from the document EP 2865 484 A1.

As known, in recent years it has become increasingly common to use furniture made up of panels of variable dimensions produced in small repeatable batches and later assembled to make the desired furniture. Such types of furniture have quickly become popular and are currently among the most sold.

As mentioned, the furniture is assembled from panels, preferably made of wood or chipboard, of standard dimensions and preworked with the drill holes, the grooves and the openings necessary for the connection with other panels, the finishings, the locks and other accessories in general, horizontal and lateral holes to allow the insertion of pins, the fastening of the door hinges or furthermore for the positioning of the locks and/or handles.

The processing of said panels on conventional machines and on so-called point to point machines with a suction provided work surface involves substantial losses of time to change format and/or to change tools. Therefore, more flexible machines have been proposed, which in this type of production allow the manufacturing costs and therefore also the final price of the furniture to be substantially reduced, having practically null format change and tool change times. Machines of this kind include CNC work centers commonly known by the name "borers" or "through panel boring centers". The machine is programmed with the mapping of the holes and openings to be made on the panel that is moved so as to translate on a plane inside the machine, being positioned at the suitable point for the hole to be made. The bit is supported by a tool-holder head, like for example the one disclosed in Italian patent no.1401082 to the same Applicant.

In order to allow the panel to be gripped and moved, (pneumatically actuated) clamps are commonly used that are capable of gripping and holding the panel that is transported and positioned at the various drill passages managed by the numerical control. This type of movement, although effective and very common, does however have some problems.

Firstly, the run along the advancement axis of the clamp is limited (in general to about one meter or a little more) for bulk and structural reasons: when the panel has a greater length than that of the run of the clamp, indeed, the machine must interrupt the cycle, lock the panel so as to allow the clamp to open, go back to the start of run point, grip the panel again and proceed with the drilling action. This operation is clearly quite slow and involves successive gripping of the panel, and therefore long work time and a waste of energy.

A further problem linked to the gripping of the panel with the clamp described is that, when a hole is interfering with the clamp, the latter has to be repositioned. This is a particularly big problem on small sized panels (since the percentage of surface occupied by the clamp with respect to the total surface is substantial).

Yet another problem is linked to the fact that, when the processing to be carried out foresees the use of a disc cutter, for example in the case of a channel, or in the case of milling to make a hole with a large diameter with interpolation techniques, or the external trimming of the panel itself, if the panel is longer than the run of the clamp, the gripping of the piece to be machined by the clamp itself takes place either with the tool still in the work channel, or with lowering of the tool and reinsertion thereof in the channel once the clamp has gripped the panel again. In both cases scratching occurs at the point of contact with the tool, which marks the surface of the panel, with damages both in terms of economic value (since the panel is worth less if it is ruined), and in terms of appearance (since the panel does not have an optimal surface finish).

An alternative solution to the use of clamps is that which foresees the use of a belt driving system. A system of this type is the one described in Italian patent n. 1401081 to the same Applicant. Although the belt driving system has been very effective, it has become appropriate to provide an alternative driving system that especially in certain circumstances (particularly rough pieces, processing that generates strong vibrations during milling, where the belt system has proved particularly delicate) is able to offer performance of even higher quality.

A known woodworking machine having multiple clamps for transporting a panel to be worked as per the preamble of attached claim 1 is disclosed in EP2865484.

The object of the present invention is therefore to solve the problems outlined above by providing a drilling machine with a driving device that in particular allows the machining of long panels with high quality even in the case of rough panels and with strong vibrations during milling, at the same time being less bulky and efficient, in particular with reference to the work speed and productivity, irrespective of the size of the panel.

A further object of the present invention is to provide a drilling machine with a driving device of the panel with less movement of masses and more easily controllable with respect to known systems.

Such objects are achieved with a drilling method and machine according to the invention, the essential characteristics of which are defined by the attached independent claims.

The characteristics and advantages of the drilling method and machine according to the invention will be apparent from the following description of an embodiment thereof, given as a non-limiting example, with reference to the attached drawings, in which:

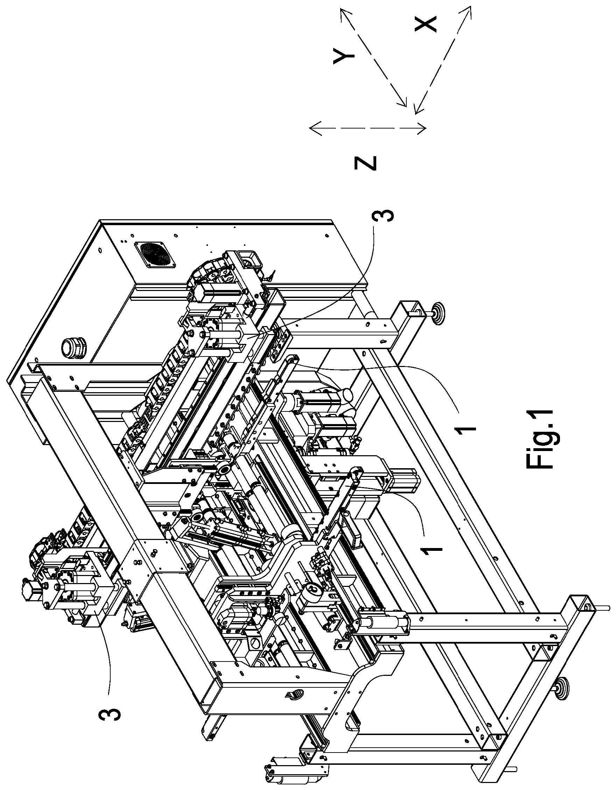

- figure 1 shows a perspective view of the machine as a whole; more specifically, the machine is shown without an upper safety cover for the sake of clarity;

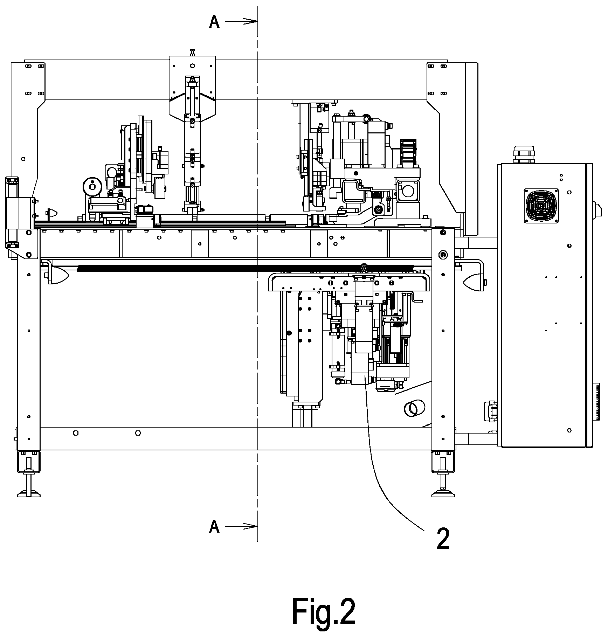

- figure 2 is a front view of the machine of figure 1;

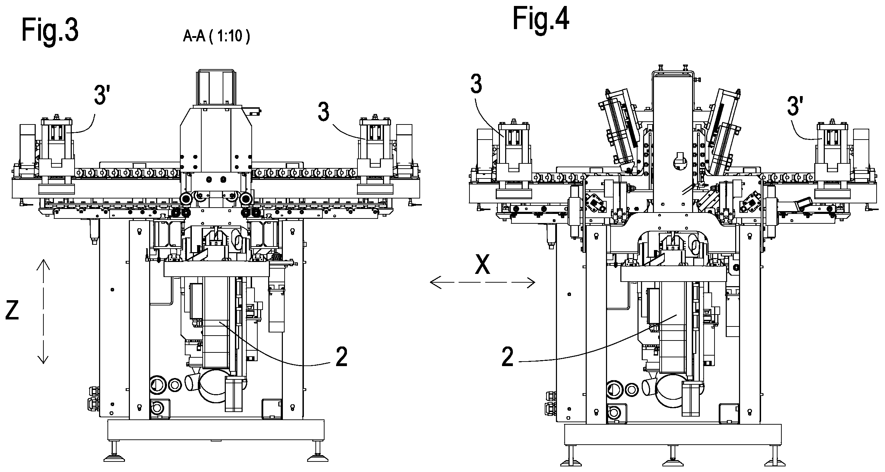

- figure 3 is a cross section view according to the plane AA indicated in figure 2;
- figure 4 is a top view of the drilling machine of the previous figures;
- figures 5a to 5d show in sequence the operation of the driving system according to the invention.

With reference to the above figures, according to the invention a panel transportation device is integrated in a drilling machine or CNC work station for processing and particularly for drilling and milling panels of wood (and/or similar) intended for the production of furniture. The overall characteristics of the drill are like in the prior art; therefore, the machine is not illustrated or described in detail.

To the extent to which it is relevant to the present invention it is sufficient to note that the drill comprises a working plane, typically horizontal on which there lies a panel P that must be worked. The machine also provides for an inlet from which the panel is inserted, and to this purpose the inlet is reached by horizontal guides 1 that allow the panel to be supported and actually define the aforementioned working plane. The horizontal guides are parallel to one another and are arranged according to an advancement direction X of the panel P in the machine; the guides are also spaced apart by a variable distance based on the width of the panel along an axis Y perpendicular to X and defining with it the working plane of the panel itself. The variable distance thus allows the change of format of the panel being processed. A third vertical axis Z completes a 3D absolute Cartesian reference system.

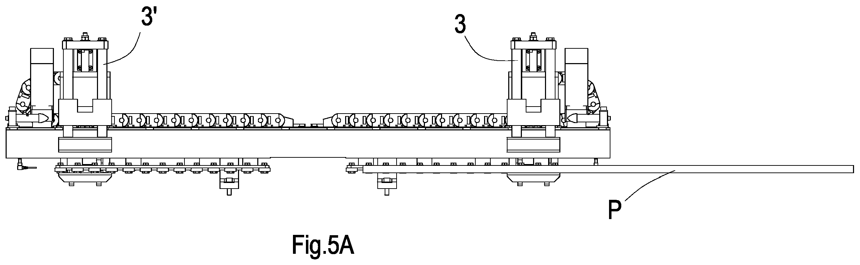

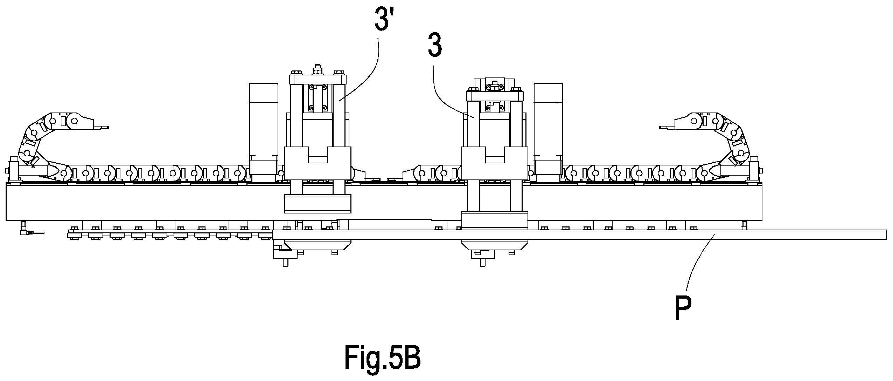

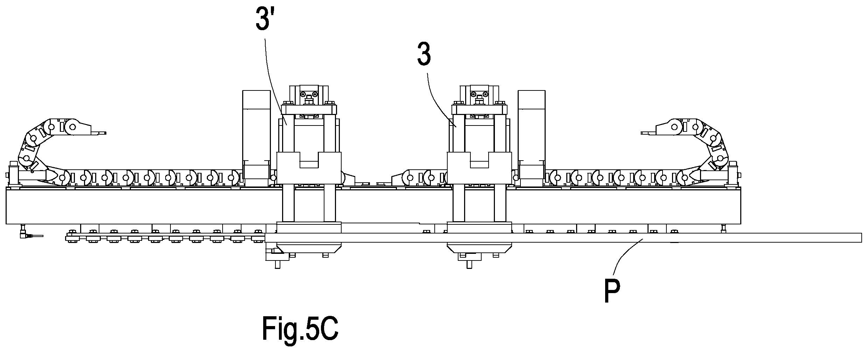

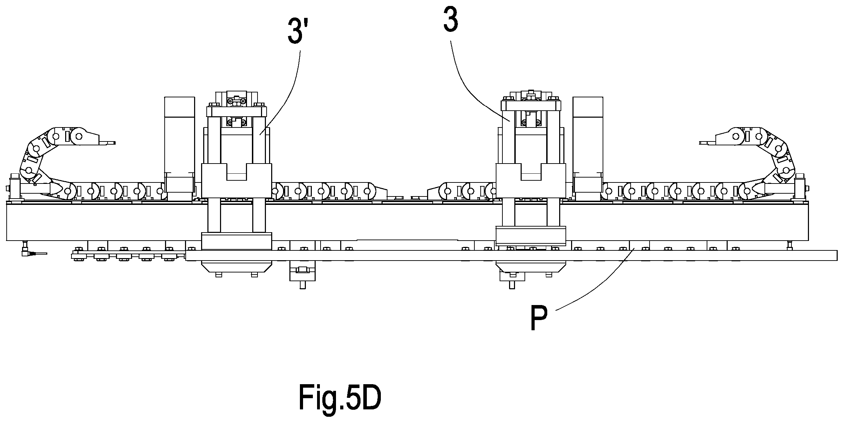

The working plane is acted upon by the tool-holder head of a drilling unit (of a known type, therefore not described in detail) indicated with 2 in the figures, which carries out the processing on the panel P. The latter (shown only schematically in figures 5a to 5d) advances on the working plane according to the advancement direction X.

The actuation of the drilling unit is controlled by a numerical control system CAM that, further to suitable setup of the mapping of the holes and processing to be carried out, moves the unit itself.

The panel P is transported on the working plane by a transportation system shown in isolation in figures 5a to 5d. In detail, the transportation system according to the invention comprises two clamps 3, 3' independently mobile from one another. Each clamp is mobile in translation along the advancement direction X by means of brushless motors that engage on respective rack and pinion drive systems or another system like recirculating ball screws, etc. according to a known configuration. The clamps are positioned laterally at one of the two guides 1, so as to grip the side P1 of the panel P that projects beyond the same guide.

The aim of the transportation system according to the invention is to allow the drilling machine to work along the entire surface of panels of length even greater than the sum of the runs of the two clamps 3, 3', i.e. for the panel to be able to be moved by the two clamps for a potentially unlimited length. Such a potentially unlimited run is defined by a virtual coordinate/position X' defined by the combined run of the two clamps, as will be described hereinafter.

The panel transportation system is controlled by a CPU in which there resides a firmware adapted for controlling the movement of the clamps in the terms that will become clearer hereinafter.

Now it will be discussed in detail the operation of the transportation system according to the invention. When the panel P is arranged in the machine, its side P' inserts in the first clamp 3 (the one closest to the inlet) which, at a zero step, is open (figure 5a). This allows the panel to slide in the clamp that does not close its grip until the machine is started by the operator. Once the clamp 3 closes its grip on the panel P it starts to move towards a target position pre-calculated by the firmware (the calculation of such a target position will be discussed hereafter) thus displacing the panel according to the advancement direction X. At this point, in the specific operating mode of the present invention, if the pre-calculated target position is beyond the run limit of the first clamp, the panel is passed to the second clamp 3'.

The passage of the panel from one clamp to the next takes place in greater detail as follows.

In an adaptation position the panel is engaged simultaneously with the first and the second clamp; however, the second clamp is open, and therefore the panel slides in it, driven only by the action of the first clamp. At this point, the second clamp 3' clamps the panel P for an exchange step. It should be noted that the simultaneous gripping of the panel by both of the clamps is practically instantaneous because it lasts a few milliseconds (less than 10 milliseconds). During this simultaneous gripping of both of the clamps, the panel is in movement; in order to grip the panel therefore the second clamp 3' must move in the open condition with a certain time advance and only when it has reached the same speed as the panel will it be switched by the CPU to the grip position. When the second clamp 3' has gripped the panel P the first clamp 3 opens, releasing the grip. The second clamp 3' continues the movement at the same speed as the first clamp 3 and the panel P advances according to the direction X.

Summarizing, the piece is moved always by a single clamp except in the exchange step in which both of the clamps grip on the piece. The panel is thus moved thanks to a sequence of coordinated movements of gripping/release of each clamp with respect to the other.

The clamps both have a run limitation that is lower with respect to the real span of the run that they could physically reach. The clamp 3 has its run limited positively, and the clamp 3' has its run limited negatively. This allows processing with the milling/cutting unit even of the areas of the panel that theoretically could be affected by the gripping and that would thus be engaged by the clamp, but that due to the limitations of the runs will never be engaged by either of the two clamps. In detail, the first clamp 3 has an upper run limit in the positive direction equal to the distance of the mill center minus the bulk of milling/cutting unit, the second clamp 3' has a lower negative limit in the negative direction that is set equal to its distance from the zero point plus the bulk of the milling/cutting unit.

In order to control the operating mode described above, it is possible to use a firmware that with the help of suitable known sensors interpolates the virtual horizontal coordinate X' with those of the physical axes Y and Z obtaining the precise position of the panel with respect to the real axis X and, on the other hand, determining the trajectory and the engagement/disengagement steps of the single clamps to position the panel in the desired working position.

Starting from the acceleration parameters of the panel according to the physical axes X, Y and Z and detecting the virtual coordinate X' every millisecond (thus also knowing its acceleration and speed) the CPU calculates in real time the starting point of dynamic engagement (so-called dynamic "gantry") of the clamp to the panel, so as to ensure that when the coordinate according to the physical axis X has reached the speed identical to that of the virtual coordinate X', the clamp can be closed and the run point when the clamp closes on the piece will correspond to that of the pre-calculated target. Given that the clamp starts from motionless and having to match the virtual coordinate dynamically, the firmware calculates the space necessary to reach the speed of the virtual coordinate, taking into account that when it is reached it can also have a different speed, made available in advance by the numerical control.

Now going back to the pre-calculation of the target positions, this can be carried out in an offline mode starting from the integral characteristics of the profile that are inserted into the control system as input data. The calculation in offline mode has the advantage of not using memory resources that remain, on the other hand, available to the firmware for controlling the movement. The calculation of the engagement/disengagement positions is based on the run data of the clamps with respect to the physical axes and is carried out by the firmware. As mentioned above, the run of the two clamps is limited as a function of the size/bulk of the tool-holder heads. Depending on the predetermined position of the hole, the run data and the size of the tool-holder heads, the firmware determines the switch-on (grip position) and switch off (release) positions of the clamps.

The limit positions of the single clamps must be restricted further by the firmware as a function of the space necessary for the single clamps to accelerate, grip the panel, decelerate and release the grip since all of these steps take place with the piece in motion. The definition of the gripping points is also influenced by the programmed milling and cutting speed that, for the same dynamics of the clamp axis, it must ensure that the clamp being released has the time necessary to reposition itself for the subsequent grip synchronized with the virtual axis. Furthermore, it is necessary to take into account of the dead zones, i.e. the points of the panel P that neither of the two clamps can reach with their standard run. This implies that the system must identify clamping positions useful for also working the end part of the piece.

As mentioned, when there is an exchange between then first clamp 3 and the second clamp 3' there is a moment at which both of the clamps are gripping the panel. This is permitted by the fact that the second clamp clamps the panel only at the moment when it has reached the same speed as it. This obviously requires a calculated time, dependent on the dynamics of the closing axis of the clamp to which a space travelled by the moving piece corresponds.

The target positions of the trajectory pre-calculated by the firmware at subsequent time units (at time T the target positions of N subsequent time units are already pre-calculated) are also used to carry out corrections to avoid errors in certain cases, such as milling on circumferences of very small radius, a case in which the engagement in real time between the virtual position and the real position of the clamps could autonomously start up the exchange procedure, activating and bringing to normal operating speed the clamp at rest when the virtual axis has already reversed its motion, while the exchange of the clamp in the reverse direction is actually needed.

To summarize, the CPU is capable of monitoring and controlling in real time the combined gripping/release steps of the clamps, comparing the real position of the clamps with the target position and knowing the movement speed of the panel and the mapping of the processing on it. The combined work of the clamps allows the panel to be moved for a potentially unlimited length (as already mentioned above), greater than the length given by the sum of the single runs of the clamps themselves. Therefore, the machine according to the invention is particularly advantageous because it can work even oversized pieces.

In general, the driving/transportation system according to the invention is particularly advantageous because it is extremely flexible and adaptable to pieces of various sizes. Moreover, it can be completely automated and managed remotely.

Furthermore, the system is not very bulky but very efficient, in particular with reference to work speed and productivity, irrespective of the size of the panel.

The clamps are preferably of the pneumatic type. The pneumatic feeding system of the clamps is not described in detail, since it is obvious for those skilled in the art to implement it in light of the operation of the clamps themselves described now.

## Claims

1. A method for moving a panel (P) of wood or other similar material in a drilling/milling machine, said machine comprising a work surface on which at least one tool-holder head works and said panel (P) is adapted to lie and move along an advancement direction (X), said machine further comprising a panel transportation system for the displacement of said panel along said advancement direction, said panel transportation system comprising a first and a second clamp (3, 3') each of which actuated by an independent driving system, said first and second clamps cooperating with each other to move said panel along a path of a length greater than the sum of the runs of each single clamp, said method comprising the steps of: - arranging said panel at an inlet of said machine on a work surface, said work surface being affected by at least one tool-holder head (2); - positioning said panel so that it is affected by a first clamp (3); - operating said first clamp in gripping said panel (P); - moving said first clamp according to an advancement direction (X) at an advancement speed towards a target position; said method being further **characterized in that**: if said target position is beyond a run limit of said first clamp (3): - operating said second clamp (3') so that it affects said panel (P) in a different position with respect to said first clamp (3); - moving said second clamp (3') so that it reaches the same advancement speed of said first clamp along said axis (X) of said panel; - without stopping the movement of said panel, close into a gripping position said second clamp on said panel when said first clamp is still in a gripping position so that in this exchange step both clamp simultaneously grip said panel at two different points of it; - releasing said first clamp (3) from the panel; - moving said panel along said axis (X) due to the drive of only said second clamp (3'); and wherein said first clamp (3) has a run limited positively, and said second clamp (3') has a run limited negatively, whereby the limitations define areas of the panel that are never engaged by either of the two clamps and where processing of the panel by said tool holder is allowed.

2. The method according to claim 1, wherein said simultaneously gripping step of the panel by both said clamps is of a time lower than 10 milliseconds.

3. The method according to claim 1 or 2, wherein a plurality of target positions are pre-calculated for a corresponding number of subsequent time units.

4. A machine for drilling/milling a panel (P) of wood or other similar material, comprising a work surface on which at least one tool-holder head works and said panel (P) is adapted to lie and move along an advancement direction (X), said machine further comprising a panel transportation system for the displacement of said panel (P) along said advancement direction (X), said panel transportation system comprising a first and a second clamp (3, 3') each of which actuated by an independent driving system, said first and second clamps cooperating with each other to move said panel along a path of a length greater than the sum of the runs of each single clamp, said machine further comprising a CPU with residing instructions to control the driving systems of said first and second clamps according to a sequence of instructed coordinated movements and gripping/release actuations of each clamp with respect to the other clamp, **characterized in that** said CPU through said residing instructions is adapted to execute the steps of the method according to any of the previous claims.

## Patentansprüche

1. Verfahren zum Bewegen einer Platte (P) aus Holz oder einem anderen ähnlichen Material in einer Bohr-/Fräsmaschine, wobei die Maschine eine Arbeitsfläche umfasst, auf der mindestens ein Werkzeughalterkopf arbeitet, und die Platte (P) so angepasst ist, dass sie aufliegt und sich entlang einer Vorschubrichtung (X) bewegt, wobei die Maschine ferner ein Plattentransportsystem zum Verschieben der Platte entlang der Vorschubrichtung umfasst, wobei das Plattentransportsystem eine erste und eine zweite Klemme (3, 3') umfasst, die jeweils durch ein unabhängiges Antriebssystem betätigt werden, wobei die erste und die zweite Klemme zusammenwirken, um die Platte entlang eines Pfads zu bewegen, dessen Länge größer ist als die Summe der Läufe jeder einzelnen Klemme, wobei das Verfahren die folgenden Schritte umfasst: - Anordnen der Platte an einem Einlass der Maschine auf einer Arbeitsfläche, wobei die Arbeitsfläche von mindestens einem Werkzeughalterkopf (2) beeinflusst wird; - Positionieren der Platte, so dass sie von einer ersten Klemme (3) berührt wird; - Betätigen der ersten Klemme zum Greifen der Platte (P); - Bewegen der ersten Klemme gemäß einer Vorschubrichtung (X) mit einer Vorschubgeschwindigkeit in Richtung einer Zielposition; wobei das Verfahren ferner
**dadurch gekennzeichnet, dass:** wenn die Zielposition außerhalb einer Laufgrenze der ersten Klemme (3) liegt, Folgendes erfolgt: - Betätigen der zweiten Klemme (3'), so dass sie die Platte (P) in einer anderen Position als die erste Klemme (3) beeinflusst; - Bewegen der zweiten Klemme (3'), so dass sie entlang der Achse (X) der Platte die gleiche Vorschubgeschwindigkeit wie die erste Klemme erreicht; - Schließen der zweiten Klemme an der Platte in eine Greifposition, ohne die Bewegung der Platte zu stoppen, während sich die erste Klemme noch in Greifposition befindet, so dass bei diesem Austauschschritt beide Klemmen die Platte gleichzeitig an zwei unterschiedlichen Punkten greifen; - Freigeben der ersten Klemme (3) von der Platte; - Bewegen der Platte entlang der Achse (X) aufgrund des auf die zweite Klemme (3') beschränkten Antriebs; und wobei die erste Klemme (3) einen positiv begrenzten Lauf und die zweite Klemme (3') einen negativ begrenzten Lauf aufweist, wobei die Begrenzungen Bereiche der Platte definieren, die nie von einer der beiden Klemmen erfasst werden und wo die Bearbeitung der Platte durch den Werkzeughalter zulässig ist.

2. Verfahren nach Anspruch 1, wobei der Schritt des gleichzeitigen Greifens der Platte durch beide Klemmen weniger als 10 Millisekunden dauert.

3. Verfahren nach Anspruch 1 oder 2, wobei eine Vielzahl von Zielpositionen für eine entsprechende Anzahl aufeinanderfolgender Zeiteinheiten vorberechnet werden.

4. Maschine zum Bohren/Fräsen einer Platte (P) aus Holz oder einem anderen ähnlichen Material, die eine Arbeitsfläche umfasst, auf der mindestens ein Werkzeughalterkopf arbeitet, und die Platte (P) so ausgelegt ist, dass sie entlang einer Vorschubrichtung (X) liegt und sich bewegt, wobei die Maschine ferner ein Plattentransportsystem zum Verschieben der Platte (P) entlang der Vorschubrichtung (X) umfasst, wobei das Plattentransportsystem eine erste und eine zweite Klemme (3, 3') umfasst, die jeweils durch ein unabhängiges Antriebssystem betätigt werden, wobei die erste und die zweite Klemme zusammenwirken, um die Platte entlang einer Bahn zu bewegen, deren Länge größer ist als die Summe der Bewegungen jeder einzelnen Klemme, wobei die Maschine ferner eine CPU mit gespeicherten Anweisungen zum Steuern der Antriebssysteme der ersten und zweiten Klemme gemäß einer Abfolge angewiesener koordinierter Bewegungen und Greif-/Freigabebetätigungen jeder Klemme in Bezug auf die andere Klemme umfasst, **dadurch gekennzeichnet, dass** die CPU durch die darin enthaltenen Anweisungen dazu ausgelegt ist, die Schritte des Verfahrens nach einem der vorstehenden Ansprüche auszuführen.

## Revendications

1. Procédé permettant de déplacer un panneau (P) en bois ou autre matériau similaire dans une perceuse/fraiseuse, ladite machine comprenant une surface de travail sur laquelle travaille au moins une tête porte-outil et ledit panneau (P) est adapté à reposer et se déplacer le long d'une direction d'avancement (X), ladite machine comprenant en outre un système de transport de panneau pour le déplacement dudit panneau le long de ladite direction d'avancement, ledit système de transport de panneau comprenant une première et une seconde pince (3, 3') actionnées chacune par un système d'entraînement indépendant, lesdites première et seconde pinces coopérant l'une avec l'autre pour déplacer ledit panneau le long d'une trajectoire d'une longueur supérieure à la somme des courses de chaque pince individuelle, ledit procédé comprenant les étapes consistant à : - agencer ledit panneau au niveau d'une entrée de ladite machine sur une surface de travail, ladite surface de travail étant affectée par au moins une tête porte-outil (2) ; - positionner ledit panneau de sorte qu'il est affecté par une première pince (3) ; - faire fonctionner ladite première pince en saisissant ledit panneau (P) ; - déplacer ladite première pince selon une direction d'avancement (X) à une vitesse d'avancement vers une position cible ; ledit procédé étant en outre **caractérisé en ce que :** si ladite position cible se trouve au-delà d'une limite de course de ladite première pince (3) : - faire fonctionner ladite seconde pince (3') de sorte qu'elle affecte ledit panneau (P) dans une position différente par rapport à ladite première pince (3) ; - déplacer ladite seconde pince (3') de sorte qu'elle atteint la même vitesse d'avancement que ladite première pince le long dudit axe (X) dudit panneau ; - sans arrêter le mouvement dudit panneau, fermer dans une position de saisie ladite seconde pince sur ledit panneau lorsque ladite première pince est encore dans une position de saisie de sorte que, dans cette étape d'échange, les deux pinces saisissent simultanément ledit panneau en deux points différents de celui-ci ; - libérer ladite première pince (3) du panneau ; - déplacer ledit panneau le long dudit axe (X) sous l'effet de l'entraînement de ladite seconde pince (3') uniquement ; et dans lequel ladite première pince (3) a une course limitée positivement, et ladite seconde pince (3') a une course limitée négativement, moyennant quoi les limitations définissent des zones du panneau qui ne sont jamais mises en prise par l'une ou l'autre des deux pinces et où le traitement du panneau par ledit porte-outil est autorisé.

2. Procédé selon la revendication 1, dans lequel ladite étape de saisie simultanée du panneau par les deux pinces est d'une durée inférieure à 10 millisecondes.

3. Procédé selon la revendication 1 ou 2, dans lequel une pluralité de positions cibles sont précalculées pour un nombre correspondant d'unités de temps ultérieures.

4. Machine permettant de percer/fraiser un panneau (P) en bois ou autre matériau similaire, comprenant une surface de travail sur laquelle travaille au moins une tête porte-outil et ledit panneau (P) est adapté à reposer et se déplacer le long d'une direction d'avancement (X), ladite machine comprenant en outre un système de transport de panneau pour le déplacement dudit panneau (P) le long de ladite direction d'avancement (X), ledit système de transport de panneau comprenant une première et une seconde pince (3, 3') chacune actionnée par un système d'entraînement indépendant, lesdites première et seconde pinces coopérant l'une avec l'autre pour déplacer ledit panneau le long d'une trajectoire d'une longueur supérieure à la somme des courses de chaque pince individuelle, ladite machine comprenant en outre une UC avec des instructions résidentes pour commander les systèmes d'entraînement desdites première et seconde pinces selon une séquence de mouvements coordonnés instruits et d'actionnements de saisie/libération de chaque pince par rapport à l'autre pince, **caractérisée en ce que** ladite UC, par le biais desdites instructions résidentes, est adaptée à exécuter les étapes du procédé selon l'une quelconque des revendications précédentes.
